# EUROPEAN PATENT SPECIFICATION

(11) **EP 0 454 754 B1**
(45) Date of publication and mention of the grant of the patent: **10.03.1993**
(21) Application number: 90902406.9
(22) Date of filing: 12.01.1990
(51) Int. Cl.: F24D 19/04

(54) **DEVICE FOR THE TEMPERATING OF PREMISES**
KLIMAVORRICHTUNG FÜR EIN GEBÄUDE
DISPOSITIF POUR LA CLIMATISATION DE LOCAUX

(30) Priority: 17.01.1989 SE 8900154
(43) Date of publication of application: 06.11.1991
(73) Proprietor: MICKOS, Kaj, S-131 46 Nacka (SE); STENIUS, Kristian, S-135 00 Tyresö (SE)
(72) Inventor: MICKOS, Kaj, S-131 46 Nacka (SE); STENIUS, Kristian, S-135 00 Tyresö (SE)
(74) Representative: Nilsson, Karl Ingvar
(86) International application number: SE9000025
(87) International publication number: WO9008291

(56) References cited:
- EP-A- 0 008 544
- CH-C- 549 773
- GB-A- 655 692
- SE-B- 436 446
- SE-C- 143 991
- US-A- 4 160 475

## Description

The present invention relates to an arrangement for attemperating, or modifying, room air, i.e. an arrangement which is operative to heat or to cool a room, as required. The attemperating medium used is a liquid and the conditions are the same when heating and when cooling the room. When reference is made in the following to heating, such reference shall be understood also to include cooling in appropriate places, since the temperature of the heating medium may be lower than that of the room concerned and thus function as a cooling medium. In the case of an arrangement which is intended solely for heating purposes, electric heating may be applied as an alternative. It is conceivable to use a combination of electrical heating and liquid cooling in an inventive attemperating arrangement.

The need for a room heating and room cooling arrangement which can be readily installed in a rational and efficient fashion has become greater in keeping with the increase in labour costs.

Stricter house-keeping with regard to future energy consumption and tariffs which vary widely from season to season make it desirable, both on the part of the energy consumer and on the part of the energy producer, to use ambivalent heating systems, i.e. systems which have more than one operating mode and which can be switched readily between alternative modes. Such systems enhance the requirement of low installation costs.

It is also desirable that such heating systems are constructed in a manner which will allow low input supply temperatures to be used. Low input supply temperatures, however, require the provision of large heat-exchanging devices, in order to supply sufficient heat. These devices are bulky and unsightly, or require comprehensive constructional and technical work to be undertaken.

One requirement placed by modern consumers on heating systems is that such systems will enable the temperature of a given room or room to be modified.

It is also desirable that heating systems (at least partially) will deliver heat through convection and therewith achieve more uniform temperature distribution throughout the room, and therewith also to achieve better fuel economy.

Many different attemperating systems are known to the art (see, for instance, the SE-C-143 991). None of these systems, however, is able to fulfil all of the above requirements in a satisfactory manner.

The object of the present invention is to provide an attemperating arrangement which will fulfil said requirements completely or at least partially.

This object is achieved in accordance with the invention with an arrangement having the features set forth in claim 1. Further advantages are achieved with the features according to the dependent claims.

One advantage afforded by the inventive arrangement is that the whole attemperating system is based on standard piping (piping made from copper, steel or other materials) which is delivered in conventional pipe lengths, therewith enabling the complete system to be installed on site and connected with conventional couplings or pipe-sections. This affords a great deal of flexibility and enables the system to be adapted to changing conditions. Furthermore, it is not necessary to pre-order the system, since the system can be held in stock. Another advantage is that attemperation of the room air can be effected with the minimum of losses. Distinct from other heating systems in which the heat-carrying pipes are insulated to prevent losses, the inventive arrangement is designed so that the pipes will give-off heat, or take-up heat effectively, but are installed in a manner which will enable a room to benefit from the heat exchange thus effected.

A third advantage is that the arrangement is so configured that heat in its heating mode heat will be delivered to the room both by radiation and convection, and the arrangement, as a result of the manner in which it is positioned, will form a warm-air curtain against external walls, therewith enabling the room to be brought to a lower temperature with retained comfort and more uniform temperature distribution in the room. Another advantage afforded by the inventive arrangement is that normal rom-air temperatures can be obtained at the most suitable locations, i.e. along the external walls of the building, whereas attemperation of selected rooms can be effected through heat-exchange devices mounted on partition walls which connect with the external walls of the building. Thus, the whole of the heat distribution system will deliver heat, although temperature control can be effected only with a part of the system.

A further advantage is that the inventive arrangement is configured in a manner which, if so desired, enables the arrangement to be combined with other systems. The heat-exchanging of the inventive arrangement are such as to enable the arrangement to be used advantageously with low input supply temperatures.

The good heat-exchange properties of the inventive arrangement have been achieved by constructing the heatexchange devices from material which possess good thermal conduction and which can be provided with longitudinally extending, surface-enlarging grooves. The arrangement is configured so that supply and return pipes are separated from one another, so as to prevent undesirable heat-transfer therebetween and so as to form between respective heat-exchangers vertical channels through which heat can be emitted or taken-up by convection.

The pipes are clamped or mounted in some other way adjacent sleeves belonging to the heat-exchange devices, so as to obtain good contact between pipes and heat exchanger.

The invention will now be described in more detail with reference to exemplifying embodiments thereof illustrated schematically in the accompanying drawings, in which
Figure 1 is a cross-sectional view of an inventive arrangement in its simplest form;
Figure 2 is a longitudinal sectional view on the line II-II in Figure 1;
Figure 3 is a cross-sectional view of a preferred embodiment of the inventive arrangement;
Figure 4 is a cross-sectional view of a further embodiment of the inventive arrangement intended for electrical-heating or alternatively liquid-heating in combination with liquid-cooling;
Figure 5 is a cross-sectional view of an inventive embodiment provided with alternative means for clamping a flanged sleeve to the pipe conducting attemperating medium;
Figure 6 is a view from above illustrating the installation of an inventive arrangement in a building; and
Figure 7 is a cross-sectional view of a skirting panel which is an imitation of the flanges of the embodiment illustrated in Figure 3.

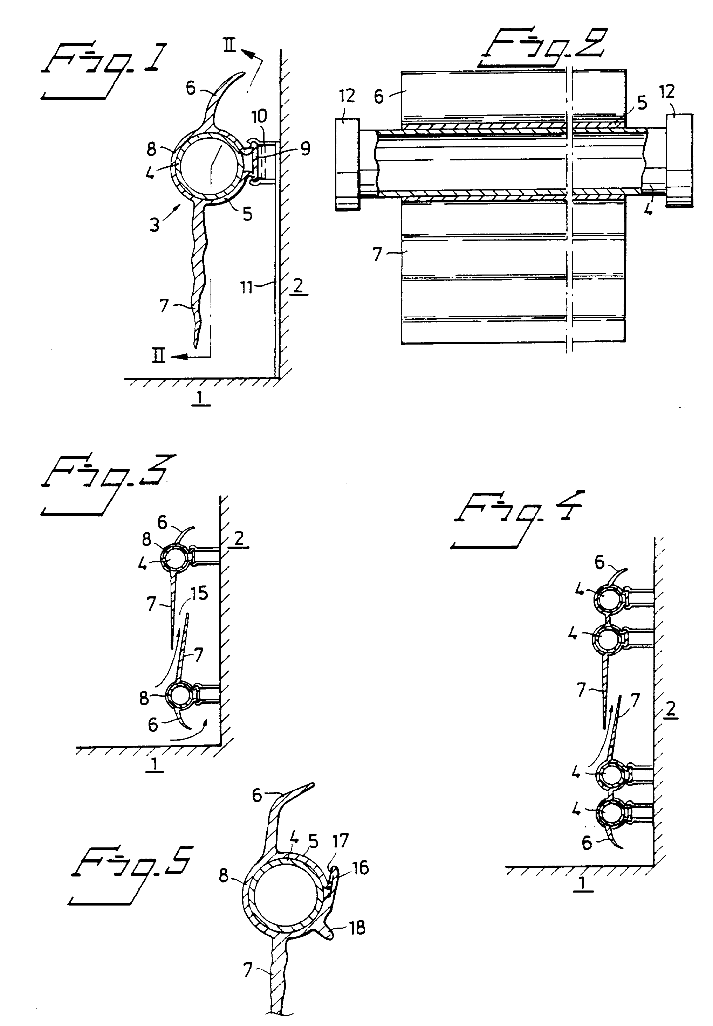

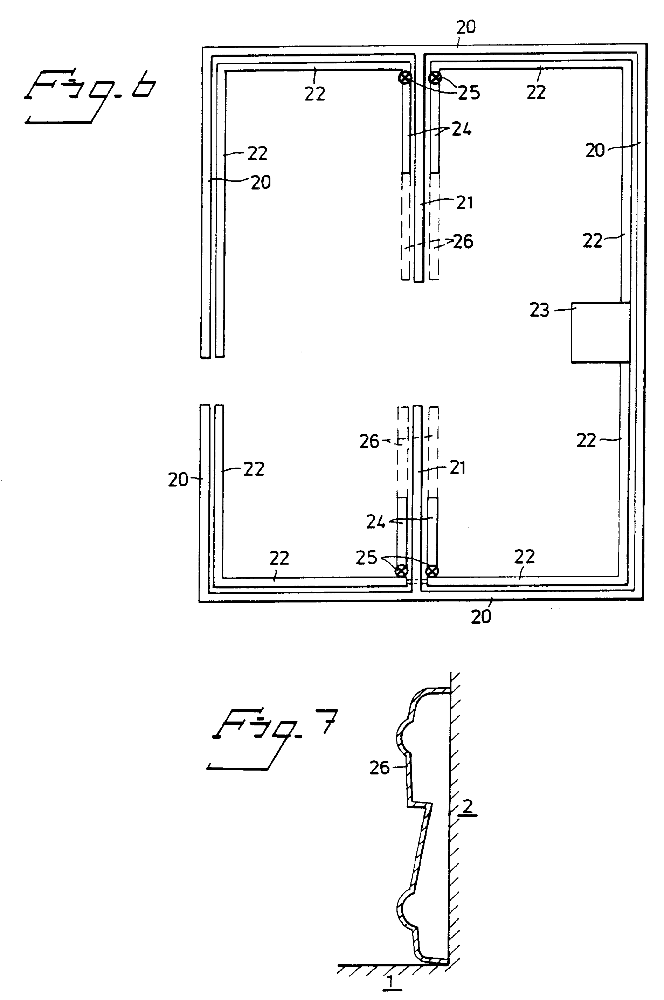

Figures 1 and 2 illustrate a section 3 of an inventive arrangement positioned in the angle defined between a floor 1 and a wall 2. The illustrated section includes a pipe 4, preferably a metal pipe, which conducts an attemperating medium, and a sleeve 5 which is mounted externally on the pipe and which has integral therewith an upper flange part 6, a lower flange part 7 and an intermediate sleeve part 8, all of which are preferably manufactured from extruded aluminium alloy.

The part of the sleeve 5 which faces towards the wall 2 is configured with an outwardly jutting part 9, which originally had the shape shown in broken lines but which has been brought to the illustrated shape with two inwardly angled legs in a known manner, with the aid of an upper and a lower roller and a roller (not shown) pressed against the planar part of the outwardly jutting part 9, such that when the sleeve 5 is tightened fully, said part will be locked in the illustrated shape 9. The outwardly projecting part 9 extends along the whole length of the sleeve 5 and is firmly clamped between resilient arms 10 carried on vertical rails 11. The rails 11 are fixed to the wall 2 at an appropriate spacing along the length of the projecting part 9.

The arrangements illustrated in Figures 1 and 2 are obtained preferably in given lengths, e.g. lengths of 5 m, with the pipes 4 cut flush with the ends of the flanges 6-8. When installing the arrangement, said arrangement is cut to a desired flange length, wherein the sleeve 5 is cut off at both ends with the aid of a cutting tool, with a centering pin (not shown) inserted into respective ends of the pipe 4. The superfluous part of the tube 4 on each end of the sleeve 5 can be readily removed, subsequent to opening up or clipping-off the outwardly projecting part 9 on each part, with the aid of pliers for instance. The lengths of the outwardly projecting ends of the pipe 4 can then be adjusted and fitted with standard couplings 12, for coupling the pipe to other sections or to connecting pipes. Due to the low resistance presented by the pipe 4 to the flow of liquid therethrough, attemperating liquid is able to flow through the pipe at such a rate that the temperature drop will be sufficiently small to enable a single pipe line to be used. Alternatively, an electric cable can be fitted in the pipe 4, for heating purposes.

Figure 3 illustrates a variant which comprises two flanged pipes of the same kind as that illustrated in Figures 1 and 2, said pipes being mounted one above the other in partially overlapping relationship. The upper pipe is mounted with its longer flange-part 7 pointing downwards, whereas the bottom pipe is mounted with its longer flange-part 7 pointing upwards and directed slightly towards the wall 2, so as to form a venturi-nozzle-like channel 15 between the flange-parts 7. One of the pipes 4 may serve as a supply pipe and the other as a return pipe for attemperating liquid. Alternatively, one of said pipes may contain an electric cable, so as to enable heating to be effected alternately with liquid-carried heat and electrically generated heat.

This also applies to the embodiment illustrated in Figure 4, in which each flange is provided with two pipes 4, one pipe for liquid and the other for housing an electric cable, or both being intended to conduct liquid so as to double the effect.

Figure 5 illustrates a simplified embodiment of the outwardly projecting part, here referenced 16, of said sleeve, said part 16 having only one inwardly angled leg 17. A projection of this configuration can be flattened more readily, although in this case a nose 18 or the like is preferably provided along the sleeve 5, so as to enable the sleeve to be clamped firmly in a manner corresponding to the Figure 1 embodiment.

Figure 6 is a view from above of a building comprising external walls 20 and internal partition walls 21. Extending along all outer walls 20 are air-attemperating sections 22 which comprise two flanged pipes for carrying attemperating liquid in accordance with Figure 3, said pipes being drawn in a manner similar to wall-skirting panels or boards and being connected to a boiler 23. Connected to the sections 22 extending along the external walls 20 are sections 24 which extend along part of the partition walls 21, said sections 24 being connected to the sections 22 via control valves 25. These control valves enable the temperature of selected rooms to be modified individually through some degrees, either upwards or downwards, without noticeably changing the temperature conditions along the external walls. For reasons of an aesthetic nature, the walls which lack sections 22 are provided with skirting boards 26 (shown in broken lines in Figure 6) which in appearance are similar to the sections 22, i.e. the configuration illustrated in Figure 3, as shown in Figure 7. These skirting panels may consist of profiled wooden strips or metal profiled sections 26.

The flanges may have a configuration different to that shown, so as to increase the heat transfer with the surrounding room air. Furthermore, strips or metal profiled sections may be attached to the wall inwardly of the flanges and the pipes 4, so as to guide the air flow into improved contact with said flanges and pipes.

## Claims

1. An arrangement for attemperating the rooms of a building with the aid of horizontal, rectilinear, elongated metal profiled-sections (6,7,8) which extend along walls, preferably the external walls (20) of said building and which form upwardly extending and downwardly extending flanges and are in thermal contact with at least one similarly horizontal pipe (4) which conducts attemperating medium, and which is intended to modify the temperature of an air flow passing through a space defined between the metal profiled sections and said wall, **characterized** in that the pipe includes appropriately adapted pipe-sections (4) which are provided with coupling means at the ends thereof and each of which is embraced by a metal sleeve (5) which is joined in good thermal contact with the pipe section (4) and with the upwardly and downwardly directed flanges (6,7), which flanges can be made integral with the sleeve (5), wherein the sleeve (5) has provided along the whole of its length an outwardly projecting, near-flattened part (9,16) which presents at least one inwardly angled leg (17) which is operative to hold the inside of the sleeve (5) resiliently clamped against the outer surface of the pipe section (4).

2. An arrangement according to Claim 1, **characterized** in that two mutually identical sections (22) are mounted at mutually different heights in partially overlapping relationship with the mutually facing parts (7) of the flanges positioned so as to form therebetween a passageway (15) for air to be attemperated.

3. An arrangement according to Claim 1 or 2, **characterized** in that each of the outwardly projecting parts (9) of the sleeves preferably has two inwardly angled legs operative to co-act with a plurality of fastener devices (10,11) mounted on the wall and spaced along the length of each section.

4. An arrangement according to any one of Claim 1-3, **characterized** in that at least one pipe (4) is intended for conducting a liquid attemperating medium and at least one pipe (4) has an electric-heating cable disposed therein.

5. An arrangement according to any one of Claims 1-4, **characterized** in that sections (24) are also mounted along room partitioning-walls (21) which connect with the external walls (20); and in that said sections (24) are coupled to the sections (22) extending along said external walls via control valves (25) operative to control the temperature of the rooms in said building.

## Patentansprüche

1. Vorrichtung zum Temperieren von Räumen eines Gebäudes mittels horizontal verlaufender, rechteckig langgestreckter, profilierter Metallformteile (6,7,8), die Raumwänden entlang verlaufen, vorzugsweise entlang von Außenwänden (20) des Gebäudes, die nach oben und nach unten gerichtete Flansche aufweisen und die im thermischen Kontakt mit zumindest einem zweckgerichtet geformten, horizontal verlaufenden, eine zu temperierendes Medium führenden Rohr (4) stehen, wobei die Vorrichtung der Temperaturveränderung einer Luftströmung dient, die durch einen Luftströmungskanal geführt ist, den die Metallformteile und die Wand definieren, **dadurch gekennzeichnet,** daß das Rohr angepaßte Rohrabschnitte (4) einschließt, die an ihren Enden mit Verbindungsmitteln versehen sind und von denen jeder Rohrabschnitt von einer Metallhülse (5) umschlossen ist, die in thermisch gut leitenden Kontakt mit dem jeweiligen Rohrabschnitt (4) und den nach oben und nach unten gerichteten Flanschen (6,7) steht, wobei diese Flansche mit der Hülse (5) einstückig ausgeführt sein können, währen die Hülse (5) entlang ihrer gesamten Länge einen nach außen gering vorspringenden flachen Teil (9,16) aufweist, der zumindest einen nach innen angewinkelten Fuß (17) bildet, mit dem die Hülse (5) auf ihrer Innenseite federnd an der Außenseite des Rohrabschnitts (4) gehalten ist.

2. Vorrichtung nach Anspruch 1, **dadurch gekennzeichnet,** daß zwei benachbarte identische Formteilabschnitte (22) in relativ zueinander unterschiedlichen Höhen angeordnet sind und mit einander zugewandten Flächenteilen (7) der Flansche teilweise einander überlappen, um zwischen den Flächenteilen einen Strömungskanal (15) für zu temperierende Luft zu bilden.

3. Vorrichtung nach Anspruch 1 oder 2, **dadurch gekennzeichnet,** daß jeder der nach außen vorspringenden Teile (9) der Hülsen vorzugsweise zwei nach innen angewinkelte Füße in Wirkverbindung mit einer Mehrzahl von Befestigungsvorrichtung (10,11) aufweist, die der Wand zugeordnet sind und auf der Länge jedes Abschnittes voneinander beabstandet sind.

4. Vorrichtung nach einem beliebigen der Ansprüche 1 bis 3, **dadurch gekennzeichnet,** daß zumindest ein Rohr (4) zur Führung einer zu temperierenden Flüssigkeit vorgesehen ist und daß zumindest ein Rohr (4) in sich ein elektrisch beheizbares Kabel aufnimmt.

5. Vorrichtung nach einem beliebigen der Ansprüche 1 bis 4, **dadurch gekennzeichnet,** daß Formteilabschnitte (24) auch entlang von Raumtrennwänden (21) angeordnet sind, die mit den Raumaußenwänden (20) in Verbindung stehen und daß die Formteilabschnitte (24) mit den Formteilabschnitten (22) verbunden sind, die sich entlang den Raumaußenwänden erstrecken, wobei diese Verbindung über Steuerventile (25) erfolgt, die zur Bestimmung der Temperatur der Räume innerhalb des Gebäudes zu betätigen sind.

## Revendications

1. Dispositif pour la climatisation des pièces d'un bâtiment, grâce à des sections profilées en métal, linéaires, allongées et horizontales (6, 7, 8) qui s'étendent le long des murs et, de préférence, le long des murs extérieurs (20) dudit bâtiment, et qui présentent des brides s'étendant vers le haut et vers le bas, et qui sont en contact thermique avec au moins un conduit horizontal (4) qui transporte un liquide de réfrigération et qui est destiné à modifier la température d'un flux d'air qui traverse un espace défini entre les sections profilées en métal et ledit mur, caractérisé en ce que ledit conduit comprend des sections de conduit (4) appropriées qui sont munies de moyens de couplage à leurs extrémités, et dont chacune est entourée d'un manchon métallique (5) qui comporte un joint présentant un bon contact thermique avec la section de conduit (4), et avec les brides dirigées vers le haut et vers le bas (6, 7); lesdites brides pouvant former un ensemble monobloc avec ledit manchon (5), ledit manchon (5) présentant sur toute sa longueur une section (9, 16) sensiblement plane et débortante, ladite section présente au moins un jambage formant un angle vers l'intérieur, et qui est susceptible de maintenir l'intérieur du manchon fixé de façon élastique contre la surface extérieure de la section de conduit (4).

2. Dispositif selon la revendication 1, caractérisé en ce que deux sections identiques (22) sont montées à des hauteurs différentes et, de façon à se couvrir partiellement, les parties (7) se faisant face des brides étant positionnées de façon à former entre elles un passage (15) pour l'air destiné à être climatisé.

3. Dispositif selon la revendication 1 ou 2, caractérisé en ce que chacune des parties des manchons qui débordent vers l'extérieur présente, de préférence, deux jambages inclinés vers l'intérieur susceptibles d'agir en coopération avec une pluralité de dispositifs de fixation (10, 11) montés sur le mur et disposés à intervalles réguliers le long de chacune desdites sections.

4. Dispositif selon l'une quelconque des revendications 1 à 3, caractérisé en ce qu'au moins un conduit (4) est destiné à transporter un milieu de climatisation liquide, et en ce qu'un câble de chauffage électrique est disposé dans au moins l'un des conduits (4).

5. Dispositif selon l'une quelconque des revendications 1 à 4, caractérisé en ce que des sections (24) sont aussi montées le long des murs intérieurs (21) qui s'appuient sur les murs extérieurs (20), et en ce que lesdites sections (24) sont reliées aux sections (22) qui sont disposées le long des murs externes par l'intermédiaire de soupapes de contrôle (25) susceptibles de contrôler la température des pièces dans ledit bâtiment.
